# EUROPEAN PATENT APPLICATION

(11) **EP 2 808 530 A1**
(43) Date of publication of application: **03.12.2014**
(21) Application number: 14001579.3
(22) Date of filing: 06.05.2014
(51) Int. Cl.: F02M 27/04, F23C 99/00, C02F 1/48

(54) **Apparatus and method for processing any fluid or mixture of fluids or any gas or mixture of gases such as air, and in particular, a mixture of fluid or gaseous hydrocarbons with air**

(30) Priority: 06.05.2013 FR 1301048
(71) Applicant: Vos. Tecs. International S.A.R.L., 98001 Monaco Cedex (MC)
(72) Inventor: Spacoli, Marina, 98001 Monaco Cedex (FR)
(74) Representative: Schuffenecker, Thierry

(57) **Abstract**

An apparatus for improving the combustion of a mixture of fluid or gaseous hydrocarbon with combustion air comprising,
- an inner tube for receiving the flow of said mixture, the inner tube having at both sides two fittings or couplers;
- a central magnetic ring for generating an axial magnetic field in the vicinity of the center of said inner tube ;
- two magnetic rings located on both sides and held at a predetermined distance from said central magnetic ring;
- a first connecting bridge allowing a magnetic connection of the two magnetic rings but without connection with said central magnetic ring; and
- two connection bridges allowing a magnetic connection between said central magnetic ring and each of the magnetic rings at both ends.

## Description

### Technical field

The present disclosure relates to the field of ecological systems exploiting the natural effects of magnetic fields on fluids, and particularly a device for improving the combustion of mixtures comprising fluids or gaseous hydrocarbons with air.

The system does not require any electrical wiring since it only uses the natural magnetic field.

### Background Art

The hydrocarbons can be defined as a set of chemical compounds, consisting essentially of carbon atoms and hydrogen atoms which are bonded together by means of the co-participation of valence electrons having a binding/association energy.

Under dynamic conditions, when being subject to a magnetic field, a fluid can absorb forces exerted both at the electronic and the nucleic level. Changing the orbits of most peripheral electrons also gives rise to the modification of the electronic properties of a single atom or molecule and therefore the ability to chemically interact with another atom or molecule.

Combustible molecules comprise hydrogen atoms which are all placed outwardly, whereas the atoms of carbon occupy the inner portion of the molecule. The properties of the chemical bond - and the sequence of chemical reactions which are likely to occur - determine to which type one atom belongs and is ruled by the laws governing the atomic cloud.

During the combustion of a hydrocarbon material, one generally tries to bias the electronic configuration of the atom, in particular, by supplying an additional energy to the molecule so as to weaken the C-H bond within the considered molecule.

With the expected effect of a change in the physical characteristics of the combustible molecule, this results in a better mixture with oxygen and, finally, a reduction of the amount of energy required to activate the combustion .

This is the technical problem to be solved by the object of the present disclosure.

### Summary of the invention

It is an object of the present disclosure to provide a new apparatus for achieving a "coherent" magnetization of a combustible mixture comprising a hydrocarbon material with air so as to facilitate the paramagnetic interaction between the different constituent elements.

It is another object of the present disclosure to achieve an apparatus which can improve the kinetics and the thermodynamics of combustion of a hydrocarbon material.

Another object of the present disclosure is to provide an apparatus adapted to improve the combustion of a fluid or gaseous hydrocarbon mixture with combustion air.

A further object is to provide an apparatus adapted to process any fluid or mixture of fluids or any gas or mixture of gases requiring a specific physical magnetic change in the structure of some of its constituents.

These and other objects are achieved by means of an apparatus for improving the combustion of a mixture of fluid or gaseous hydrocarbon with combustion air, comprising:
- an inner tube for receiving the flow of said mixture, the inner tube having at both sides two fittings or couplers;
- a central magnetic ring for generating an axial magnetic field in the vicinity of the center of said inner tube;
- two magnetic rings located on both sides and held at a predetermined distance from said central magnetic ring;
- a first connecting bridge allowing a magnetic connection of the two magnetic rings but without connection with said central magnetic ring;
- two connection bridges allowing a magnetic connection between said central magnetic ring and each of the magnetic rings at both ends.

In one particular embodiment, the apparatus further comprises a closed housing for protecting the magnetic rings as well as the connecting bridges. Preferably, the closed housing comprises an outer tube fitted with two lateral flanges, having apertures on both sides for the inner tube.

In one particular embodiment, the apparatus comprises spacers for holding a respective distance between the magnetic rings and for preventing inadvertent connection between the connecting bridges and the wall of the housing.

Preferably, the spacers have the shape of sleeves for maintaining a predetermined distance between the central magnetic ring and each of the magnetic rings located at both ends of the inner tube.

In one particular embodiment, the apparatus further comprises spacers having the shape of sleeves for the purpose of maintaining a predetermined spacing between said magnetic rings located at both ends of the tube and the corresponding lateral flange of the housing.

The disclosure further achieves a process for improving the combustion of a mixture of fluid or gaseous hydrocarbon with combustion air, comprising the following method steps:
- flowing said hydrocarbon mixture within an inner tube, said internal tube having two fittings or couplers at both sides;
- generating in said tube a first central axial magnetic field by means of a core magnetic ring arranged at the center of said inner tube;
- generating at both ends of said inner tube an axial magnetic field by means of, respectively, a first and a second end magnetic rings, and maintained at a predetermined distance apart from said central magnetic ring ;
- providing a first magnetic connection bridge between said first and second magnetic rings while avoiding any connection with said central magnetic ring;
- providing two additional connection bridges between said central magnetic ring and each of said end magnetic rings.

The disclosure further provides an apparatus for treating a fluid or mixture of fluids requiring a specific physical magnetic change in the structure of some of its constituents, comprising:
- an inner tube for receiving the flow of said fluid or mixture of fluids, the inner tube having at both sides two fittings or couplers;
- a central magnetic ring for generating an axial magnetic field in the vicinity of the center of said inner tube;
- two magnetic rings located on both sides and held at a predetermined distance from said central magnetic ring;
- a first connecting bridge allowing a magnetic connection of the two magnetic rings but without connection with said central magnetic ring; and
- two connection bridges allowing a magnetic connection between said central magnetic ring and each of the magnetic rings at both ends.

The disclosure further provides an apparatus for improving the combustion of any gas or mixture of gases, such as air, comprising:
- an inner tube for receiving the flow of said gas or mixture of gases, the inner tube having at both sides two fittings or couplers;
- a central magnetic ring for generating an axial magnetic field in the vicinity of the center of said inner tube;
- two magnetic rings located on both sides and held at a predetermined distance from said central magnetic ring;
- a first connecting bridge allowing a magnetic connection of the two magnetic rings but without connection with said central magnetic ring; and
- two connection bridges allowing a magnetic connection between said central magnetic ring and each of the magnetic rings at both ends.

### Description of the drawings

Other features of one or more embodiments of the disclosure will appear from the following description of embodiments, with reference being made to the accompanying drawings.
Figure 1 illustrates a view of one embodiment of a device comprising a tube having two connectors and three magnetic rings .
Figure 2 shows a section of the device illustrated in Figure 1.
Figure 3 illustrates a view of the device further comprising spacers.
Figure 4 illustrates a particular section of the device showing the spacers 21-24.
Figures 5 and 6 illustrate respectively a plan view and a section of the device showing the upper bridge 31 and lower bridges 32-33 .
Figure 7 shows a complete view of the device, within its protective housing comprising an external tube 43 and two flanges 41 and 42 .
Figure 8 shows a view of the inner tube 10 with its two connectors 1 and 2 in Example type % "
Figures 9a and 9b respectively illustrate a section and a view of each of the flanges, e.g. flange 41, adapted to a % inches flow.
Figures 10a and 10b respectively illustrate a section and a view of each of the connectors , adapted to a % inches flow.
Figures 11 a and 11 b respectively illustrate a view and a section of an embodiment of the upper bridge 31 for the magnetic connection between the two ending magnetic rings 12 and 13.
Figures 12a and 12b respectively illustrate a view and a section of an embodiment of one of the two lower bridges 32 for the magnetic connection between one of the two ending magnetic rings 12 and 13 with the central magnetic ring 11 .
Figure 13a more particularly illustrates a sectional view and a section of one of the two central magnetic spacers .
Figure 13b illustrates more particularly a sectional view and a section of the ending magnetic spacers.
Figure 14a illustrates more particularly a sectional view and a section of the central magnetic ring 11 .
Figure 14b illustrates more specifically a sectional view and a section of one of the two magnetic rings 12 or 13 .
Figure 15a illustrates a sectional view and a section of the outer tube 43.
Figure 15b illustrates a sectional view and a section of the inner tube 10 .
Figure 16 illustrates more specifically a sectional view and a view of a clamp for fixing and the connection of the - respectively upper and lower - bridges on their respective magnetic rings .
Figures 17a and 17b respectively illustrate a section view and a section of another embodiment, adapted for a different flow, for instance corresponding to a 2 inch section.

### Description of the preferred embodiment

There will now be described the modular structure of a magnetic device for improving the combustion of a fluid or gaseous hydrocarbon mixture and the combustion air thanks to the magnetic polarization of the C-H-valence bonds of the hydrocarbon molecules.

Generally speaking, one will describe below the general architecture of one embodiment. It should be noticed that the practical dimensions of the Apparatus and its components clearly depend on the flow of the combustion mixture which is desired, and such dimensions can be straightforwardly modified and adapted by one skilled in the art so as to fit to a wide variety of possible applications .

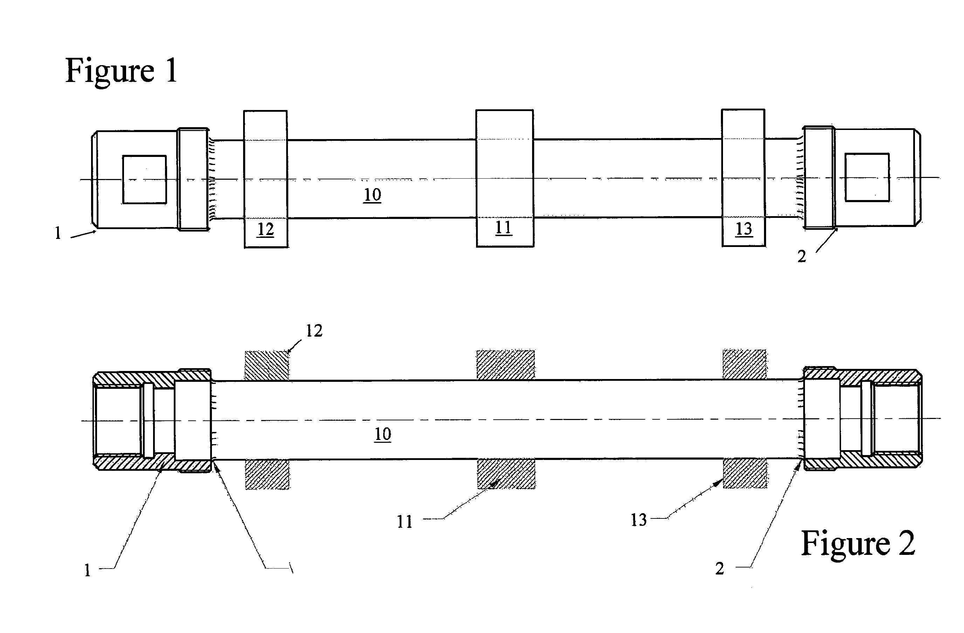

The overall architecture of one embodiment apparatus will now be described in connection with Figures 1 to 7.

As it can be seen with the view of Figure 1, and the corresponding sectional view of Figure 2, the apparatus comprises a first inner tube 10 for enabling the flow of fluid or gaseous hydrocarbon mixture. In order to allow the connection to any equipment, the device further comprises two fittings, or couplers/connectors 1 and 2 being located at both sides of inner tube 10., flanged or threaded in accordance with the particular application being considered, and the particular flow of combustible material being desired. The practical dimensioning of fittings 1 and 2, as well as that of tube 10, will depend on the flow of fluid to be processed within the device.

By way of non-limiting illustration, a specific tube 10 having two fittings 1 and 2 adapted to a % inches coupling will be described.

Generally speaking, and without limitation, the tube 10 and fittings or couplers/connectors 1 and 2 are formed of stainless steel, for example AISI Type 304 or their food version for the conduction of water AISI 316 L.

The apparatus further comprises a set of three magnets or magnetic rings 11-12-13 which are located along the inner tube 10 for the purpose of generating an axial magnetic field. More specifically, there is provided a central ring 11 (e.g. of 20mm width for fitting a % inch coupling) as well as, located on either side of the tube 10, two magnetic rings 12 and 13 of a smaller size ( by example of width 15mm fitting ¾ inch ).

In one particular embodiment, the magnetic rings 11-13 are formed of a ferrite and Samarium type material so as to generate a significant axial magnetic field within the hydrocarbon molecules and the air flowing within the inner tube 10. More specifically, the magnetic field may have a magnitude of 1000 to 3000 Gauss, and preferably 2000 Gauss.

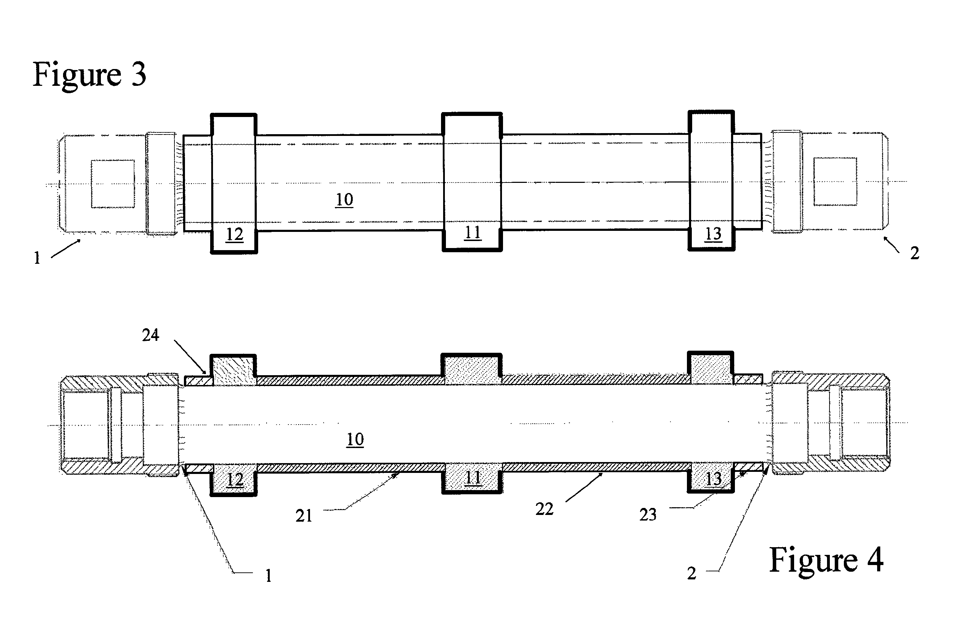

In a specific embodiment , the magnetic rings 11-13 are held in place on the inner tube 10 by means of a set of spacers, respectively 21, 22, 23 and 24, as this can be seen in the sectional view of figure 4 and the corresponding view of Figure 3 .

More particularly, the magnetic rings 12 and 13 are maintained at a predetermined distance from the center ring 11 by means of spacers 21 and 22 , respectively.

Similarly, the magnetic rings 12 and 13 are maintained at a desired distance from the fittings, respectively 1 and 2 thanks to spacers 24 and 23 .

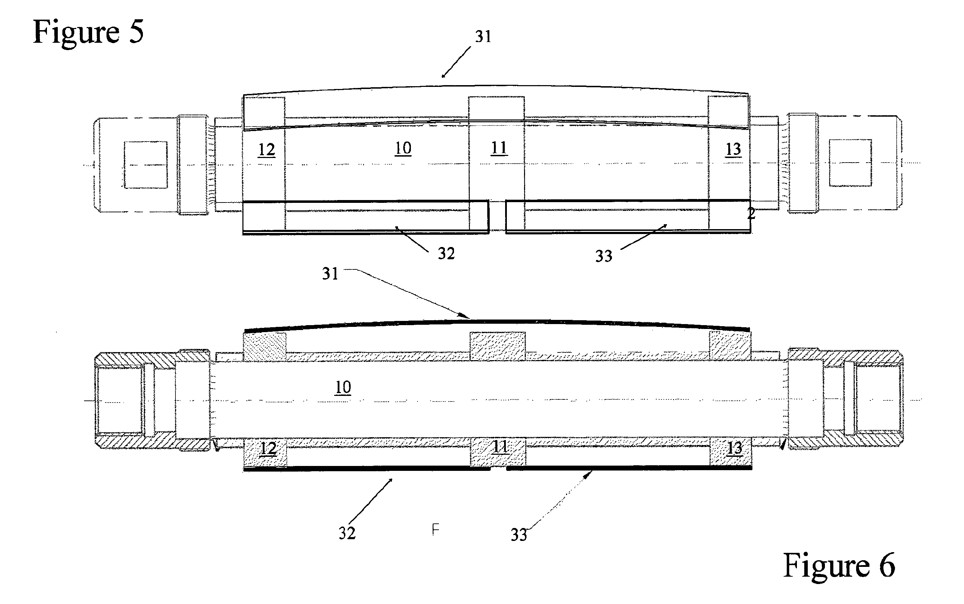

In the device being described, the role of spacers is critical for two reasons:
- Firstly, these spacers make it possible to maintain in position the three magnetic rings 11-13, thus allowing an uniform magnetic field within the internal tube 10 wherein the fluid or gaseous hydrocarbon or mixture of air has to flow;
- Secondly, these spacers will keep out of contact with the outer casing of a set of connecting bridges 31-33, as this will now be described below in relation with the views and sections of Figures 5 and 6 .

As can be seen in Figures 5 and 6, the device comprises a set of bridges, respectively an upper and a lower bridge, for the purpose of achieving a magnetic connection between the magnetic rings .

In particular, the device comprises a first upper bridge 31 made of copper (copper cathode) for performing a magnetic connection between the two end rings 12 and 13.

More particularly, bridge 31 is carried out by means of a tape of copper, for example, approximately 3mm wide and preferably less than 1 mm thick.

Furthermore , the device comprises two lower bridges, respectively 32 and 33, also made by means of a strip of copper (copper cathode) for respectively connecting the pairs of magnetic rings 12-11 and 11-13.

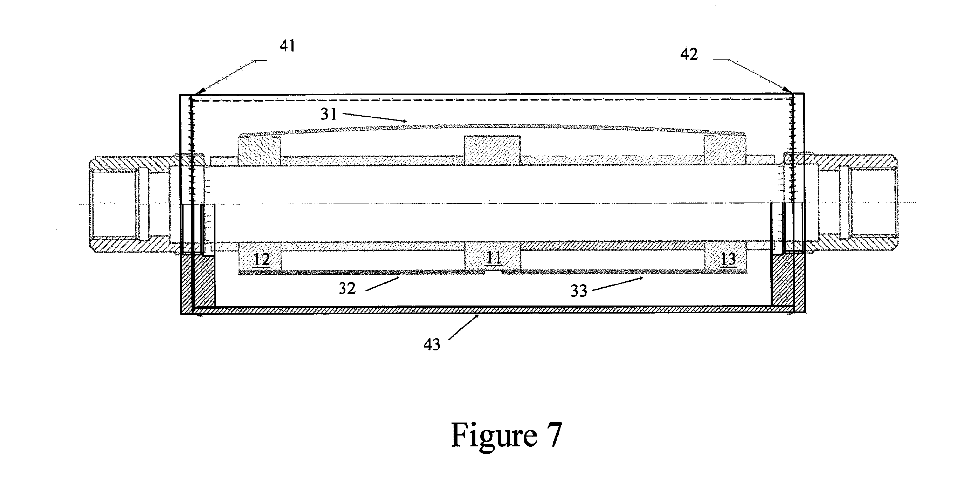

As shown in the arrangement of Figure 6 , the upper bridge 31 has a length which is sufficient to avoid contact with core ring 11, but also with an outer tube 43 being illustrated in Figure 7.

Figure 7 shows a complete view of the device, with the inner tube 10, the three magnetic rings 11-13 and their respective bridges 31-33, the whole arrangement being located within an outer tube 43 maintained out of contact of bridges 31-33, and forming , with two side flanges 41 and 42 a closed container for preserving and protecting the entire device .

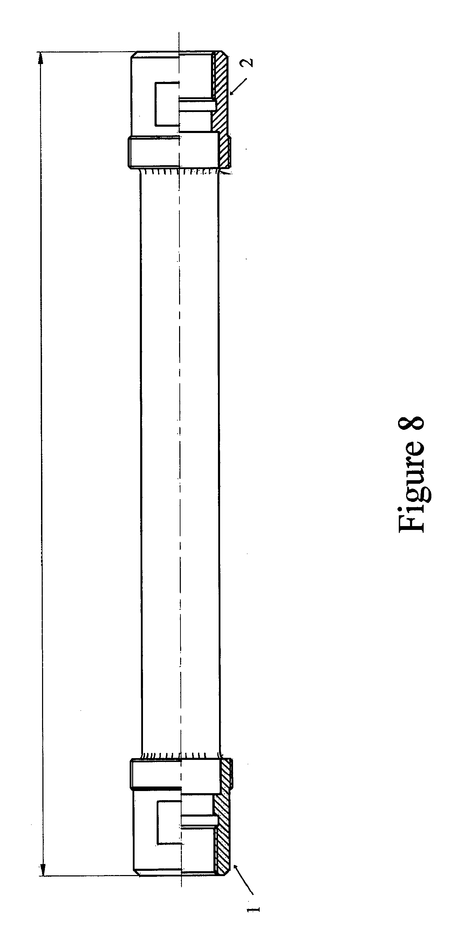

Figure 8 shows a view of the inner tube 10 with its two connectors 1 and 2 in the example of type % ".

The figures below illustrate more specifically some elements of the device just described.

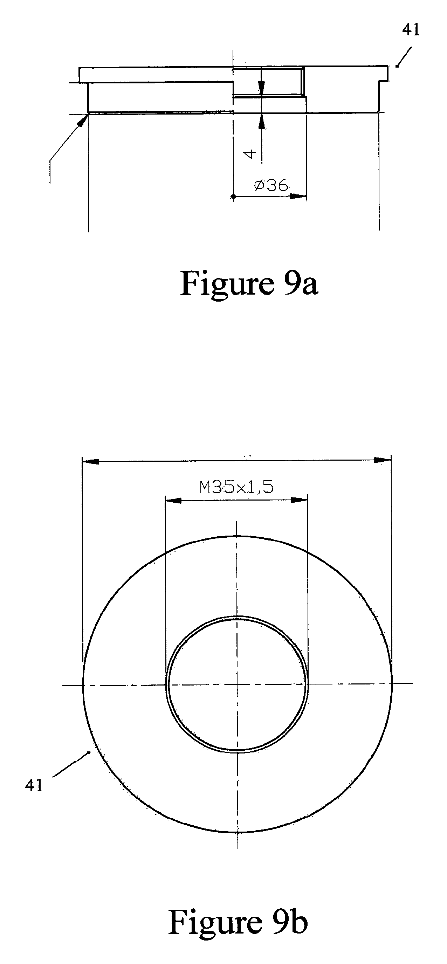

In particular, Figures 9a and 9b illustrate respectively a section and a view of each of the flanges, such as flange 41 , adapted to a rate % inches. Clearly, a skilled person will be able to adapt the structure which was described so as to fit other diameters, e.g. 2 inches , etc....

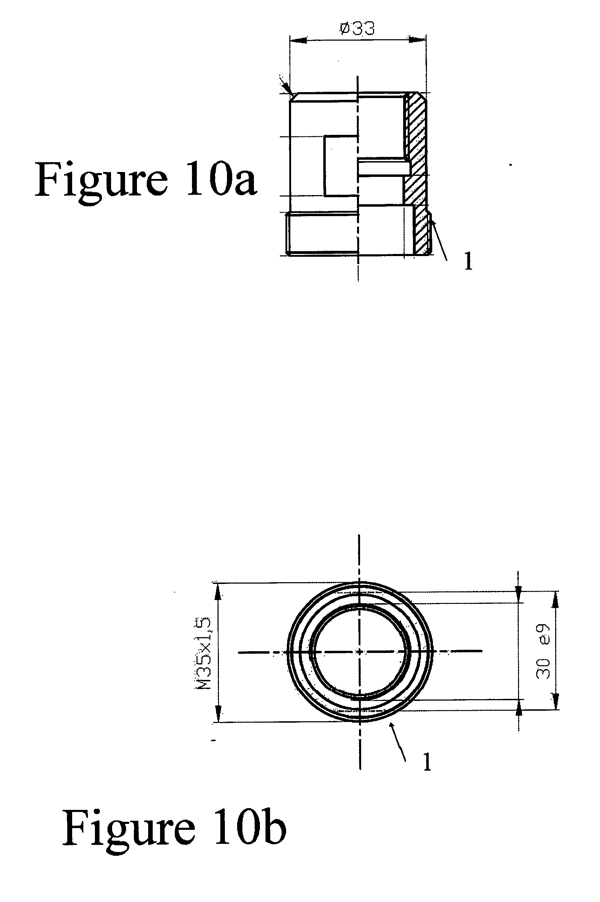

Similarly , Figures 10a and 10b respectively show a sectional view and a view of each of the fittings or couplers/connectors 1 and 2, adapted to a flow of ¾ inches.

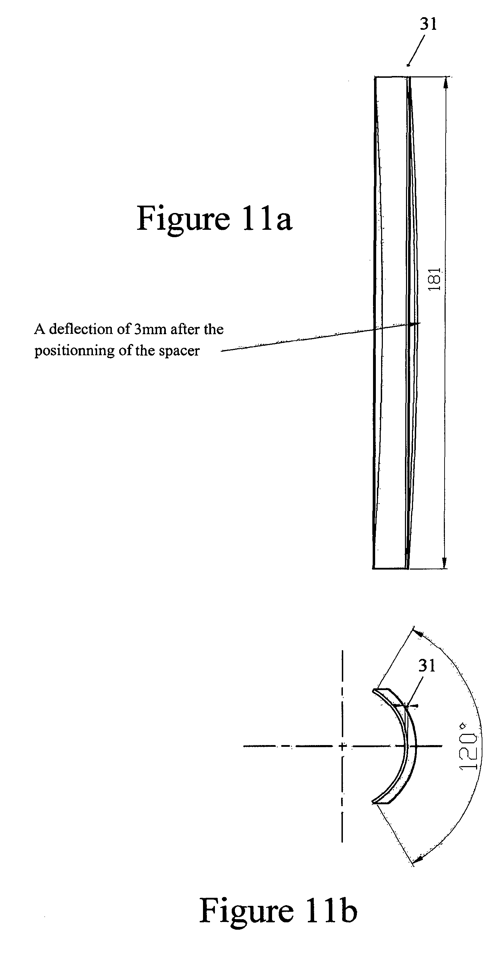

Figures 11 a and 11 b show respectively a view and a section of the upper bridge 31 for the magnetic connection between the two extreme magnetic rings 12 and 13. In a particular embodiment, once the magnetic rings 11-13 are properly positioned thanks to spacers 21-22, the bridge 31 shows a deflection D of about 3mm, for example, which avoids contact with the central ring 11. The bridge also has an arc of 120 degrees The contact bridges are made of a flat strip of copper, with a width of, for example, 3 millimeters, which can be bent for the purpose of achieving the magnetic connection to the magnet. The upper bridge (Fig. 11a, fig 11 b) has to connect the two magnets 12 and 13 being at the ends, and this is achieved with an arc of 120 degrees, for instance.

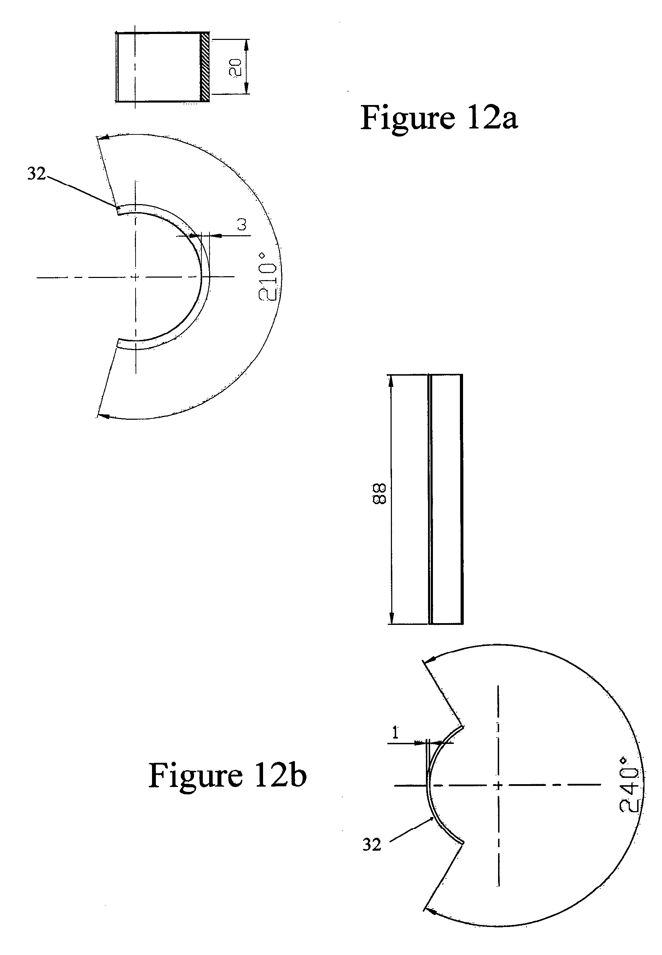

Figures 12a and 12b respectively show a sectional view and a section of an embodiment of one of the two lower bridges 32 for the magnetic connection between one of the two ending magnetic rings 12 and 13 with the central magnetic ring 11. Figure 12a and 12b show the lower contact bridges which contact one end magnet (12, 13) to the central magnet. This lower bridge is shorter than the upper bridge, thus resulting in an arc of 240 degrees, for instance.

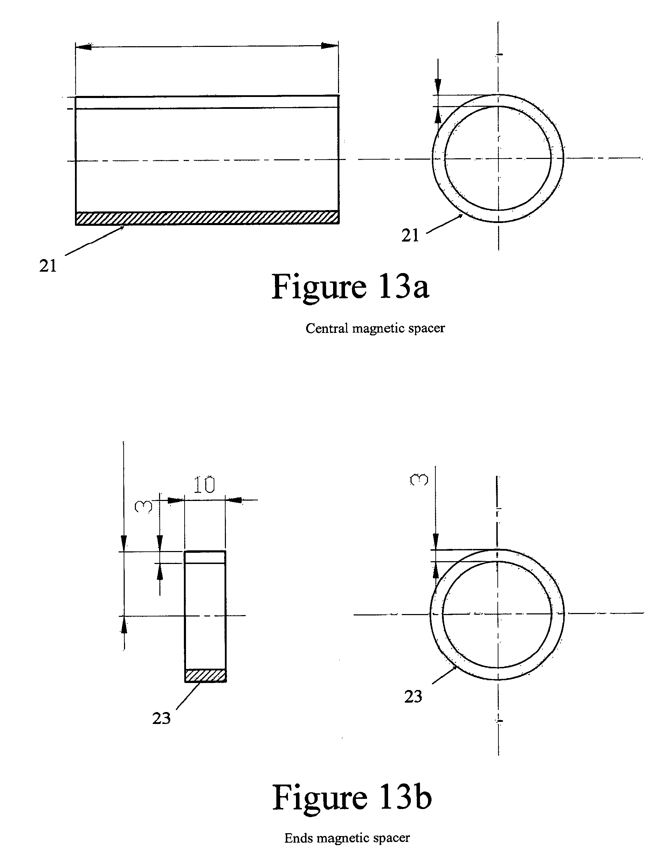

Figure 13a more particularly illustrates a sectional view and a section of one among the two magnetic core spacers , having the shape of a ring for maintaining the gap between the magnetic rings 12/11 and 13 / 11.

Figure 13b illustrates more particularly a sectional view and a section of the ending magnetic spacer, also ring shaped, which keeps a predetermined distance between the ending magnetic rings 12 and 13 and the corresponding flanges ( respectively, 41 , 42 ) .

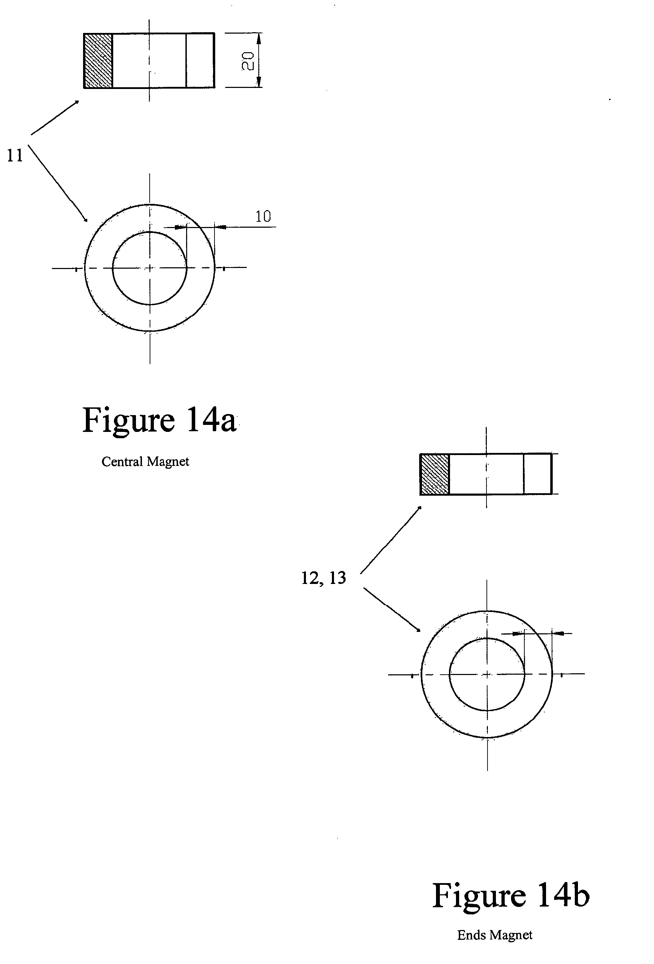

Figure 14a more particularly illustrates a sectional view and a section of the magnetic central ring 11, being ring-shaped.

Figure 14b illustrates more specifically a sectional view and a section of one of the two magnetic rings 12 or 13, having the shape of a ring or a ring flange.

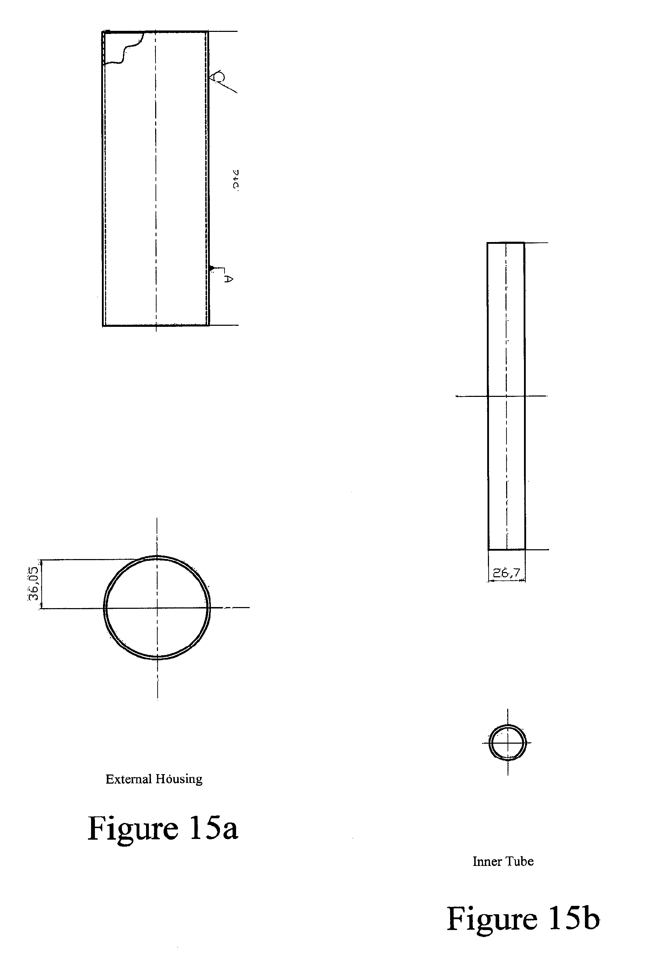

Figure 15a illustrates respectively a sectional view and view of the outer tube 43. Figure 15b respectively shows a sectional view and view of the inner tube 10.

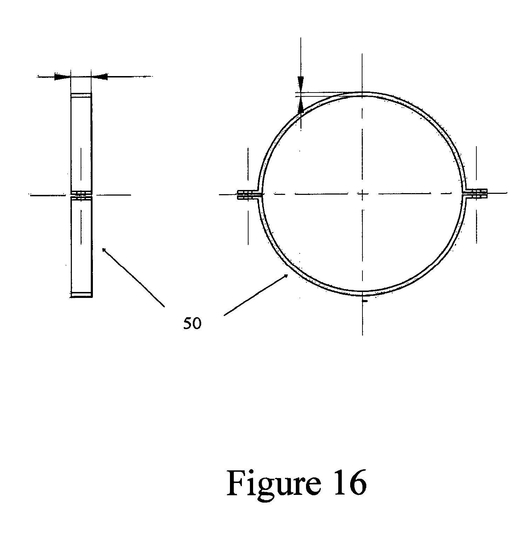

Figure 16 more specifically illustrates a sectional view and a view of a flange 50 for the fixing and the connection of the - respectively upper and lower - bridges on their respective magnetic rings. That fixing by means of a flange of the constituent flat strip of bridges 31-33 achieves a determined rigidity for the whole structure, and in particular prevents any contact of the upper / lower bridges with the internal wall of outer tube 43.

Brass may be used as a conductor and also a shielding material, - so as to keep inwardly directed the magnetic field. Brass is known for achieving good electricity conduction and also for creating a shield for containing the magnetic field and strengthening inwards the magnitude of the magnetic field.

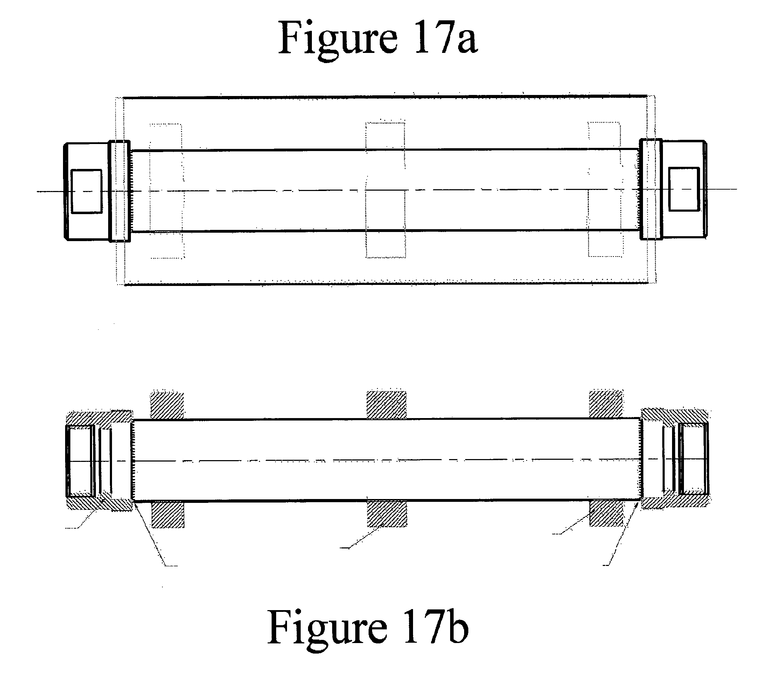

Figures 17a and 17b respectively illustrate a sectional view and a view of another embodiment, for instance adapted to a 2 inch section. The second embodiment is adapted to a different flow of fluids; therefore, most dimensions need to be adapted, and generally speaking increased to fit the proper flow. It will be understood by those skilled in the art that changes can be made in dimensions and general shapes and sizes of the components of the device without departing from the spirit and scope of the disclosure.

The device described above is used for improving the combustion of a mixture of fluid or gaseous hydrocarbon with combustion air. The hydrocarbon mixture is flowed within the inner tube 10. The core magnetic ring 11 at the center of the inner tube generates a first central axial magnetic field in the tube. The first and second end magnetic rings 12 and 13 are maintained at a predetermined distance apart from the central magnetic ring 11 by spacers 21 and 22. These end magnetic rings generate at both ends of the inner tube an axial magnetic field. Magnetic connection bridge 31 connects the first and second magnetic rings while avoiding any connection with the central magnetic ring. Connection bridges 32 and 33 connect the central magnetic ring and each of the end magnetic rings. The connection bridges allows the creation of a magnetic "path" which is useful for magnetically biasing the combustible molecules. The magnetic bias of the combustible molecules improves combustibility.

### Advantages.

The embodiment which was described above significantly improves the kinetics and thermodynamics of hydrocarbon combustion and combustion air
- The decrease in the activation energy reduces the energy required for burning the combustible material: thus increasing the useful energy with respect to the energy being consumed.
- Improving the interaction of the combustion air with the combustible material: which allows the reduction of excess air and the reduction of unburned material .

The same interaction between the magnetic field and the combustion air, oxygen, and the water may be performed, for example, prior to its combustion with a hydrocarbon.

More generally, the apparatus can also be used for treating any fluid or mixture of fluids or any gas or mixture of gases requiring a specific physical magnetic change in the structure of some of its constituents. For example, fluids such as water, milk and wine and any other liquids could be treated using the apparatus and method of the present disclosure.

## Claims

1. An apparatus for improving the combustion of a mixture of fluid or gaseous hydrocarbon with combustion air, comprising:
- an inner tube (10) for receiving the flow of said mixture, the inner tube having at both sides two fittings or couplers (1,2) ;
- a central magnetic ring (11) for generating an axial magnetic field in the vicinity of the center of said inner tube (10);
- two magnetic rings (12, 13) located on both sides and held at a predetermined distance from said central magnetic ring (11);
- a first connecting bridge allowing a magnetic connection of the two magnetic rings (12, 13) but without connection with said central magnetic ring (11); and
- two connection bridges allowing a magnetic connection between said central magnetic ring (11) and each of the magnetic rings at both ends.

2. The apparatus according to claim 1 further comprising a closed housing for protecting said magnetic rings (11, 12, 13) as well as said connecting bridges (31, 32, 33), said closed housing comprising an outer tube (43) fitted with two lateral flanges (41, 42).

3. The apparatus according to claim 2 further comprising spacers (21, 22, 23, 24) for holding a respective distance between said magnetic rings (11, 12, 13) and for preventing inadvertent connection between said connecting bridges and the wall of said housing.

4. The apparatus according to claim 3 further comprising spacers (21, 22) having the shape of sleeves for maintaining a predetermined distance between the central magnetic ring (11) and each of the magnetic rings (12, 13) located at the two ends of said inner tube (10).

5. The apparatus according to claim 3 further comprising spacers (23, 24) having the shape of sleeves for the purpose of maintaining a predetermined spacing between said magnetic rings (12, 13) at the ends of the tube and the corresponding lateral flange of said housing (43).

6. The apparatus according to claim 1, wherein each of said axial magnetic rings generates a magnetic field having a magnitude of about 1000 to 3000 Gauss.

7. A process for improving the combustion of a mixture of fluid or gaseous hydrocarbon with combustion air, comprising the following method steps:
- flowing said hydrocarbon mixture within an inner tube (10), said inner tube having two fittings or couplers (1, 2) at both sides;
- generating in said inner tube (10) a first central axial magnetic field by means of a core magnetic ring (11) arranged at the center of said inner tube (10);
- generating at both ends of said inner tube (10) an axial magnetic field by means of, respectively, a first and a second end magnetic ring, and maintained at a predetermined distance apart from said central magnetic ring (11);
- providing a first magnetic connection bridge between said first and second magnetic rings (12, 13) while avoiding any connection with said central magnetic ring; and
- providing two additional connection bridges between said central magnetic ring (11) and each of said end magnetic rings.

8. The process according to claim 7 further comprising the step of maintaining a predetermined distance between each of said magnetic rings by means of a set of spacers (21, 22, 23, 24) having the shape of sleeves arranged on the inner tube, so as to prevent inadvertent connection between the connection bridges and the wall of said housing.

9. An apparatus for treating a fluid or mixture of fluids requiring a specific physical magnetic change in the structure of some of its constituents, comprising:
- an inner tube (10) for receiving the flow of said fluid or mixture of fluids, the inner tube having at both sides two fittings or couplers (1,2);
- a central magnetic ring (11) for generating an axial magnetic field in the vicinity of the center of said inner tube (10);
- two magnetic rings (12, 13) located on both sides and held at a predetermined distance from said central magnetic ring (11);
- a first connecting bridge allowing a magnetic connection of the two magnetic rings (12, 13) but without connection with said central magnetic ring (11); and
- two connection bridges allowing a magnetic connection between said central magnetic ring (11) and each of the magnetic rings at both ends.

10. The apparatus according to claim 9 further comprising a closed housing for protecting said magnetic rings as well as said connecting bridges, said closed housing comprising an outer tube fitted with two lateral flanges.

11. The apparatus according to claim 10 further comprising spacers (21, 22, 23, 24) for holding a respective distance between said magnetic rings (11, 12, 13) and for preventing inadvertent connection between said connecting bridges and the wall of said housing.

12. The apparatus according to claim 11 further comprising:
- spacers (21, 22) having the shape of sleeves for maintaining a predetermined distance between the central magnetic ring (11) and each of the magnetic rings (12, 13) located at the two ends of said inner tube; and - spacers (23, 24) having the shape of sleeves for the purpose of maintaining a predetermined spacing between said magnetic rings (12,13) at the ends of the tube and the corresponding lateral flange of said housing (43).

13. The apparatus according to claim 9 wherein said fluid comprises consumable fluid or liquid including water, milk, or wine or mixtures of fluids or liquids.

14. An apparatus for treating any gas or mixture of gases requiring a specific physical magnetic change in the structure of some of its constituents comprising:
- an inner tube (10) for receiving the flow of said gas or mixture of gases, the inner tube having at both sides two fittings or couplers (1, 2);
- a central magnetic ring (11) for generating an axial magnetic field in the vicinity of the center of said inner tube (10);
- two magnetic rings (12, 13) located on both sides and held at a predetermined distance from said central magnetic ring (11);
- a first connecting bridge allowing a magnetic connection of the two magnetic rings (12, 13) but without connection with said central magnetic ring (11); and
- two connection bridges allowing a magnetic connection between said central magnetic ring (11) and each of the magnetic rings at both ends.

15. The apparatus according to claim 14 further comprising
- a closed housing for protecting said magnetic rings (11, 12, 13) as well as said connecting bridges (31, 32, 33), said closed housing comprising an outer tube fitted with two lateral flanges; .
- spacers (21, 22, 23, 24) for holding a respective distance between said magnetic rings (11, 12, 13) and for preventing inadvertent connection between said connecting bridges and the wall of said housing.
